# EUROPEAN PATENT APPLICATION

(11) **EP 3 890 446 A1**
(43) Date of publication of application: **06.10.2021**
(21) Application number: 21160860.9
(22) Date of filing: 05.03.2021
(51) Int. Cl.: H05B 45/385, H05B 45/50, H05B 47/25, H05B 45/54

(54) **LED DRIVING CIRCUIT**

(30) Priority: 02.04.2020 CN 202010254547
(71) Applicant: Leedarson Lighting Co., Ltd., Zhangzhou, Fujian 00000 (CN)
(72) Inventor: LIN, Rongjie, Xiamen, Fujian 00000 (CN); WEN, Shuisheng, Xiamen, Fujian 00000 (CN); LIU, Zhengkun, Xiamen, Fujian 00000 (CN); ZHOU, Huizhi, Xiamen, Fujian 00000 (CN); LIN, Liping, Xiamen, Fujian 00000 (CN); CHEN, Xiaodeng, Xiamen, Fujian 00000 (CN); CHEN, Zhibin, Xiamen, Fujian 00000 (CN); LAI, Xinghan, Xiamen, Fujian 00000 (CN)
(74) Representative: Isarpatent

(57) **Abstract**

The invention relates to the technical field of illumination, and particularly relates to an LED driving circuit. The LED driving circuit includes a rectification module, a constant current driving module, a comparison detection module and a voltage release module; the voltage release module is connected in series between a negative electrode of a load and a ground end; the comparison detection module is connected with the voltage release module and the constant current driving module and is configured for detecting a voltage at an output end of the constant current driving module, and controlling the switch unit in the voltage release module to be in an off state so as to enable the damping unit to divide the voltage for the load when the voltage at the output end of the constant current driving module is detected to be greater than a first preset voltage; and controlling the switch unit in the voltage release module to be in an on state so as to short-circuit the damping unit when the voltage at the output end of the constant current driving module is detected to be less than a second preset voltage. The LED driving circuit can inhibit impact current generated when the load is electrified and connected in a power-on state, thereby providing protection for the load.

## Description

### TECHNICAL FIELD

The invention belongs to the technical field of illumination, and particularly relates to an LED driving circuit.

### BACKGROUND

In recent years, with the advantages of high luminous efficiency, long service life, high reliability and no pollution, LED (Light Emitting Diode) illumination is gradually replacing traditional light sources such as incandescent lamps and fluorescent lamps. With the wide application of LED illumination, LED driving technology is becoming mature. The LED driving circuit is used for outputting constant current to the LED load to drive the LED lamp to work normally and mainly includes a power stage circuit and a control circuit. The control circuit controls a main switch tube in the power stage circuit to conduct intermittently, so that the power stage circuit converts a received input voltage signal into a constant current signal and outputs the constant current signal to the LED load. The control mode above is called LED constant current control.

However, when an existing LED driving circuit is connected with the load in a power-on state, due to the fact that a certain pressure difference exists in the transfer of no-load to on-load, a large current can be generated when the pressure difference passes through a load end, a large impact current can be generated by the load, and the LED driving circuit has obvious current and voltage fluctuation. In the situation above, due to the fact that the instantaneous current of the load is too large, the load can be damaged to a certain extent, and even the load directly fails.

### SUMMARY

Therefore, the embodiments of the invention provide an LED driving circuit to solve the problem that the load is damaged when the existing LED driving circuit is connected with the load in a power-on state.

An embodiment of the invention provides an LED driving circuit, comprising a rectification module, a constant current driving module, a comparison detection module and a voltage release module; the voltage release module comprises a damping unit and a switch unit;
the rectification module is connected with the power supply and is configured for converting alternating current of the power supply into direct current;
the constant current driving module is connected with the rectification module and is configured for converting the direct current into a constant current signal and outputting the constant current signal to a positive electrode of the load;
the comparison detection module is connected with the voltage release module and the constant current driving module and is configured for detecting a voltage at an output end of the constant current driving module, and controlling the switch unit in the voltage release module to be in an off state so as to enable the damping unit to divide the voltage for the load when the voltage at the output end of the constant current driving module is detected to be greater than a first preset voltage; and controlling the switch unit in the voltage release module to be in an on state so as to short-circuit the damping unit when the voltage at the output end of the constant current driving module is detected to be less than a second preset voltage;
the voltage release module is connected in series between a negative electrode of the load and a ground end.

In one embodiment, the damping unit comprises a first resistor; the switch unit comprises a first switch; and the first resistor and the first switch are connected in parallel.

In one embodiment, the comparison detection module can comprise a comparator control unit and a signal detection unit;
the signal detection unit is connected with the output end of the constant current driving module and is configured for receiving the voltage at the output end of the constant current driving module and outputting a divided voltage to the comparator control unit after voltage division;
the comparator control unit is connected with the signal detection unit and the first switch and is configured for receiving the divided voltage output by the signal detection unit, and sending a first level signal to the first switch when the divided voltage is greater than a third preset voltage, and sending a second level signal to the first switch when the divided voltage is less than a fourth preset voltage; the first level signal is configured for controlling the first switch to be in an off state so as to enable the first resistor to divide the voltage for the load; and the second level signal is configured for controlling the first switch to be in an on state so as to short-circuit the first resistor.

In one embodiment, the LED driving circuit may further comprise a power supply module;
the power supply module is connected with the comparator control unit and the signal detection unit and is configured for supplying power to the comparator control unit and the signal detection unit.

In one embodiment, the comparator control unit may comprise a second resistor and a comparator;
a first pin of the comparator is connected with the power supply module, a second pin of the comparator is connected with the second resistor and then is connected with the power supply module, a third pin of the comparator is connected with the signal detection unit, a fourth pin of the comparator is connected with the first switch, and a fifth pin of the comparator is grounded.

In one embodiment, the third preset voltage may be a first reference voltage of the comparator, and the fourth preset voltage may be a second reference voltage of the comparator;
correspondingly, the comparator is configured for outputting a low level signal to the first switch when the divided voltage output by the signal detection unit is greater than the first reference voltage of the comparator, and outputting a high level signal to the first switch when the divided voltage is less than or equal to the second reference voltage of the comparator;
the first switch is configured to be in an off state when the low level signal is received and in an on state when the high level signal is received.

In one embodiment, the rectification module comprises a bridge rectification circuit.

In one embodiment, the constant current driving module comprises a constant current unit, a second switch, a transformer and a rectification filtering unit; the constant current unit is connected with the rectification module; the constant current unit, the second switch, the transformer and the rectification filtering unit are sequentially connected; and the rectification filtering unit is connected with the positive electrode of the load;
the constant current unit is configured for modulating the direct current output by the rectification module into a primary constant current signal;
the transformer is configured for modulating the primary constant current signal into a high-frequency pulse signal;
the rectification filtering unit is configured for modulating the high-frequency pulse signal into a constant current signal and outputting the constant current signal to the positive electrode of the load;
the second switch is configured to be in an on state when the constant current unit is started up and in an off state when the constant current unit is standby.

In one embodiment, the rectification filtering unit comprises a diode and a capacitor;
the transformer and the diode form a first branch; the first branch is connected with the positive electrode of the load;
the transformer, the diode and the capacitor form a second branch; the second branch is grounded.

In one embodiment, the switch unit comprises one kind of MOS transistor, triode or relay.

The LED driving circuit provided by the embodiments of the invention comprises the rectification module, the constant current driving module, the voltage release module and the comparison detection module. The rectification module is connected with the power supply and may convert the alternating current of the power supply into direct current. The constant current driving module is connected with the rectification module and may convert the direct current into a constant current signal and output the constant current signal to the positive electrode of the load. The comparison detection module may detect the voltage at the output end of the constant current driving module. When the voltage at the output end of the constant current driving module is detected to be greater than the first preset voltage, a no-load state can be judged at the moment, and the switch unit in the voltage release module is controlled to be in an off state; after a load is connected in the off state, because the voltage release module is connected in series between the negative electrode of the load and the ground end, the pressure difference caused by the transfer of no-load to on-load firstly passes through the damping unit, and the impact current generated therefore is reduced under the influence of the damping effect; this serves to protect the load. When it is detected that the voltage at the output end of the constant current driving module is less than the second preset voltage, it can be judged that the voltage at the output end of the constant current driving module does not damage the load at the moment, and it is in a normal load state at the moment; the damping unit is short-circuited by controlling the switch unit to be in an on state, so that the circuit works in a normal state.

### BRIEF DESCRIPTION OF THE DRAWINGS

In order to more clearly illustrate the technical solutions in the embodiments of the invention, the following description briefly introduces the drawings used in the embodiments or the prior art, and it is obvious that the drawings in the following description are only some embodiments of the invention, and that other drawings can be obtained from these drawings by a person skilled in the art without involving any inventive effort.
Fig. 1 is a structure diagram of an LED driving circuit provided by an embodiment of the invention;
Fig. 2 is a structure diagram of the LED driving circuit including a first switch and a first resistor provided by an embodiment of the invention;
Fig. 3 is a structure diagram of the LED driving circuit including a comparator control unit and a signal detection unit provided by an embodiment of the invention;
Fig. 4 is a structure diagram of the LED driving circuit including a power supply module provided by an embodiment of the invention;
Fig. 5 is a circuit structure diagram of the comparator control unit provided by an embodiment of the invention; and
Fig. 6 is a circuit structure diagram of the LED driving circuit provided by another embodiment of the invention.

### DETAILED DESCRIPTION OF ILLUSTRATIVE EMBODIMENTS

In the following description, for purposes of explanation and not limitation, specific details are set forth such as a particular system architecture, techniques, etc. in order to provide a thorough understanding of the embodiments of the invention. However, it will be apparent to one skilled in the art that the invention may be practiced in other embodiments without these specific details. In other instances, detailed descriptions of well-known systems, installations, circuits, and methods are omitted so as not to obscure the description of the present invention with unnecessary details.

In order to illustrate the technical solutions described in this invention, specific embodiments are described below.

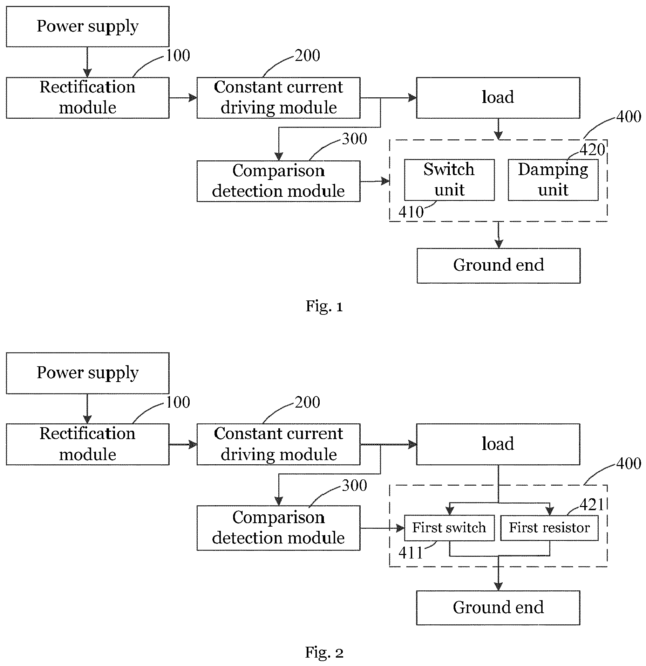

Fig. 1 is a structure diagram of an LED driving circuit provided by an embodiment. Referring to Fig. 1, the LED driving circuit is used in connection with a power supply and a load, and includes a rectification module 100, a constant current driving module 200, a comparison detection module 300 and a voltage release module 400; the voltage release module 400 includes a damping unit 420 and a switch unit 410.

The rectification module 100 is connected with the power supply and is configured for converting alternating current of the power supply into direct current.

In an embodiment of the invention, the power supply maybe a commercial power supply, and the rectification module 100 is arranged to preliminarily convert the alternating current into the direct current for use of the LED load.

The constant current driving module 200 is connected with the rectification module 100 and is configured for converting the direct current into a constant current signal and outputting the constant current signal to a positive electrode of the load.

The comparison detection module 300 is connected with the voltage release module 400 and the constant current driving module 200 and is configured for detecting a voltage at an output end of the constant current driving module 200, and controlling the switch unit 410 in the voltage release module 400 to be in an off state so as to enable the damping unit 420 to divide the voltage for the load when the voltage at the output end of the constant current driving module 200 is detected to be greater than a first preset voltage; and controlling the switch unit 410 in the voltage release module 400 to be in an on state so as to short-circuit the damping unit 420 when the voltage at the output end of the constant current driving module 200 is detected to be less than a second preset voltage.

In an embodiment of the invention, the switch unit 410 may be a relay, an MOS transistor (Metal-Oxide-Semiconductor Field-Effect Transistor) or a triode, or a switch that may change the on-off state according to the level of the comparison detection module 300. The damping unit 420 may include one or more resistors arranged according to the actual situation. The damping unit 420 and the switch unit 410 may be connected in parallel such that the damping unit 420 is short-circuited when the switch unit 410 is switched on and the damping unit and the load are connected in series when the switch unit 410 is switched off. The comparison detection module 300 and the voltage release module 400 may also be converted into other logic judgment relationships according to the connection relationship between the switch unit 410 and the damping unit 420, such as a plurality of switches being in the switch unit 410 and a plurality of resistors in the damping unit 420, the damping unit 420 may divide the voltage for the load when the switch unit 410 is in an on state by constructing a more complex connection relationship between the switch unit 410 and the damping unit 420; therefore, the switch unit 410 is controlled to be in an on state when the voltage at the output end of the constant current driving module 200 is detected to be greater than the first preset voltage; in this connection, when the voltage at the output end of the constant current driving module 200 is less than the second preset voltage, the switch unit 410 is controlled to be switched off, and the damping unit 420 is short-circuited. In the embodiment, the first preset voltage and the second preset voltage maybe set according to the no-load voltage and the on-load voltage of the LED driving circuit. For example, the no-load voltage is 50 V, and the on-load voltage is 36 V, the first preset voltage is 45 V, the second preset voltage is 40 V, the first preset voltage is greater than or equal to the second preset voltage and maybe set in the range of the no-load voltage and the on-load voltage according to the actual situation.

The voltage release module 400 is connected in series between the negative electrode of the load and the ground end.

The LED driving circuit provided by the embodiments of the invention includes the rectification module 100, the constant current driving module 200, the comparison detection module 300 and the voltage release module 400. The rectification module 100 is connected to the power supply, and may convert the alternating current of the power supply into direct current. The constant current driving module 200 is connected with the rectification module 100 and may convert the direct current into a constant current signal and output the constant current signal to the positive electrode of the load. The comparison detection module 300 may detect the voltage at the output end of the constant current driving module 200. When the voltage at the output end of the constant current driving module is detected to be greater than the first preset voltage, a no-load state can be judged at the moment, and the switch unit 410 in the voltage release module 400 is controlled to be in an off state; after a load is connected in the off state, because the voltage release module 400 is connected in series between the negative electrode of the load and the ground end, the pressure difference caused by the transfer of no-load to on-load firstly passes through the damping unit 420, and the impact current generated therefore is reduced under the influence of the damping effect; this serves to protect the load. When it is detected that the voltage at the output end of the constant current driving module 200 is less than the second preset voltage, it can be judged that the voltage at the output end of the constant current driving module 200 does not cause damage to the load at the moment, and it is in a normal load state at the moment; the damping unit 420 is short-circuited by controlling the switch unit 420 to be in an on state, so that the circuit works in a normal state.

In some embodiments, the switch unit 410 comprises one kind of a MOS transistor, a triode or a relay

In some embodiments, the damping unit 420 includes a first resistor 421; the switch unit 410 includes a first switch 411; and the first resistor 421 and the first switch 411 are connected in parallel.

In the embodiment, referring to Fig. 2, the damping unit 420 may include the first resistor 421, and the switch unit 410 may include the first switch 411, the first resistor 421 and the first switch 411 are connected in parallel. The first resistor 421 is short-circuited when the first switch 411 is switched on, and the first resistor 421 and the load are connected in series when the first switch 411 is switched off. The first switch 411 maybe selected as a triode, an MOS transistor or a relay according to the actual situation, a first end of the first switch 411 is connected with the negative electrode of the load, a second end of the first switch 411 is grounded, and a third end of the first switch 411 is connected with the comparison detection module 300, and the on-off state of the first switch 411 is changed according to the received level signal of the comparison detection module 300, and the first resistor 421 is connected in parallel with the first end and the second end of the first switch 411. The components required by the arrangement are simple, the cost is low, and the functions of reducing the impact current and protecting the load can be simply and conveniently realized.

In some embodiments, the comparison detection module 300 includes a comparator control unit 320 and a signal detection unit 310; the signal detection unit 310 is connected with the output end of the constant current driving module 200 and is configured for receiving the voltage at the output end of the constant current driving module 200 and outputting the divided voltage to the comparator control unit 320 after voltage division; the comparator control unit 320 is connected with the signal detection unit 310 and the first switch 411 and is configured for receiving the divided voltage output by the signal detection unit 310, and sending a first level signal to the first switch 411 when the divided voltage is greater than a third preset voltage, and sending a second level signal to the first switch 411 when the divided voltage is less than a fourth preset voltage; the first level signal is configured for controlling the first switch 411 to be in an off state so as to enable the first resistor 421 to divide the voltage for the load; and the second level signal is configured for controlling the first switch 411 to be in an on state so as to short-circuit the first resistor 421.

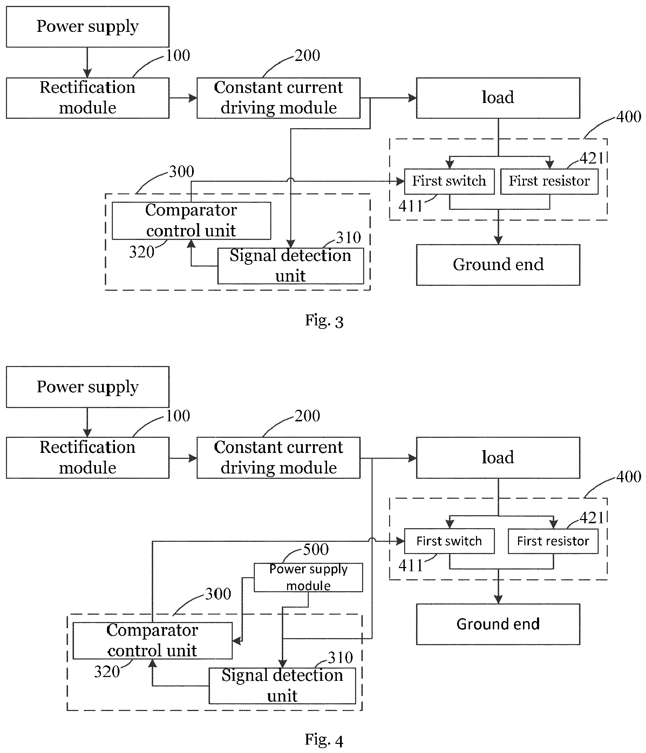

In the embodiment, referring to Fig. 3, the comparison detection module 300 may include the comparator control unit 320 and the signal detection unit 310. The comparator control unit 320 is configured for comparing the received voltage with the reference voltage of the comparator control unit 320. The voltage at the output end of the general LED driving circuit is relatively larger than the reference voltage of the comparator control unit 320. In order to enlarge the selection range of the components of the comparator control unit 320 and reduce the implementation difficulty, the signal detection unit 310 may be arranged to be connected between the comparator control unit 320 and the output end of the constant current driving module 200 as a transition. The signal detection unit 310 may collect the voltage at the output end of the constant current driving module 200, and reduce the voltage at the output end of the comparator control unit 320 by proportional voltage division, and output the divided voltage to the comparator control unit 320. Specifically, the signal detection unit 310 may be a voltage division circuit composed of several resistors, or a signal detection IC that may perform a voltage division function. Accordingly, the comparator control unit 320 may select the voltage within its voltage application range as the third preset voltage and the fourth preset voltage. Specifically, the comparator control unit 320 may be a comparator of various models and execute a comparison judgment function between the input signal with the third preset voltage or the fourth preset voltage, and output different level signals according to the comparison result, thereby controlling the on-off state of the first switch 411.

In some embodiments, the LED driving circuit may further include a power supply module 500; and the power supply module 500 is connected with the comparator control unit 320 and the signal detection unit 310 and is configured for supplying power to the comparator control unit 320 and the signal detection unit 310.

In the embodiment, referring to Fig. 4, the LED driving circuit may further include a power supply module 500, which may be a separate voltage source or a circuit having a voltage processing function connected to a mains supply. When the power supply module 500 is connected to the mains supply, the voltage can be subjected to multiple voltage reduction processes to provide a stable operating voltage for the comparator control unit 320. Accordingly, when the signal detection unit 310 includes the signal detection IC, the power supply module 500 also supplies the operating voltage to the signal detection unit 310.

In some embodiments, the comparator control unit 320 may include a second resistor R2 and a comparator B; a first pin of the comparator B is connected with the power supply module 500, a second pin of the comparator B is connected with the second resistor R2 and then is connected with the power supply module 500, a third pin of the comparator B is connected with the signal detection unit 310, a fourth pin of the comparator B is connected with the first switch 411, and a fifth pin of the comparator B is grounded.

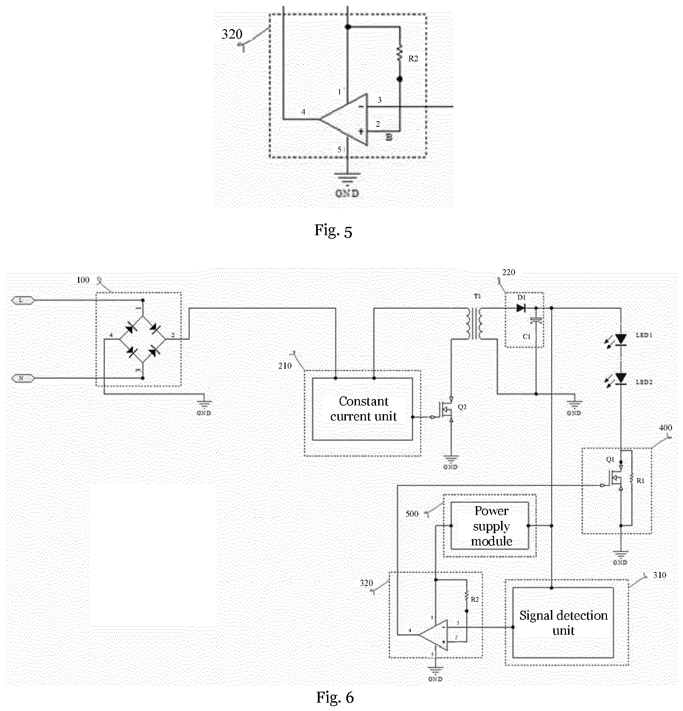

In the embodiment, referring to Fig. 5, the comparator control unit 320 may include the second resistor R2 and the comparator B. The first pin of the comparator B is connected with the power supply module 500. The second pin of the comparator B is connected with the power supply module 500 after being connected with the second resistor R2 and is configured for providing the internal reference voltage of the comparator B. The third pin of the comparator B is connected with the signal detection unit 310 and the comparator B is configured for receiving the divided voltage of the signal detection unit 310 by the third pin and comparing the divided voltage with the reference voltage. The fourth pin of the comparator B is connected with the first switch 411 and is configured for outputting a level signal to the first switch 411 according to the comparison result. The fifth pin of the comparator B is grounded.

In some embodiments, the third preset voltage is a first reference voltage of the comparator B, and the fourth preset voltage is a second reference voltage of the comparator B; correspondingly, the comparator B is configured for outputting a low level signal to the first switch 411 when the divided voltage output by the signal detection unit 310 is greater than the first reference voltage of the comparator B, and outputting a high level signal to the first switch 411 when the divided voltage is less than or equal to the second reference voltage of the comparator B; and the first switch 411 is configured to be in an off state when the low level signal is received and in an on state when the high level signal is received.

In the embodiment, referring to Fig. 5, the third preset voltage is the first reference voltages of the comparator B, and the fourth preset voltage is the second reference voltage of the comparator B; the comparator B receives the divided voltage output by the signal detection unit 310 through the third pin, and outputs the low level signal to the first switch 411 through the fourth pin when the divided voltage is judged to be greater than the first reference voltage of the comparator B, and outputs the high level signal to the first switch 411 through the fourth pin when the divided voltage is judged to be less than or equal to the second reference voltage of the comparator B; correspondingly, the first switch 411 maybe arranged to be in an off state when the low level signal is received and in an on state when the high level signal is received.

In some embodiments, the rectification module 100 includes a bridge rectification circuit.

In the embodiment, the bridge rectification circuit is adopted to perform alternating current-direct current conversion. The bridge rectification circuit is a circuit for rectifying by utilizing the one-way conductivity of a diode and includes a bridge rectifier. The bridge rectifier utilizes four diodes to be in butt joint with each other, and a positive half part of an input sine wave is conducted by two diodes to obtain a positive output; and a negative half part of the input sine wave is conducted by the other two diodes, and since the two diodes are reversely connected, the positive half part of the sine wave is still output. The utilization efficiency of the input sine wave of the bridge rectification circuit is higher than that of the half-wave rectification circuit, so the bridge rectification circuit is applicable to the LED driving circuit.

In some embodiments, the constant current driving module 200 may include a constant current unit 210, a second switch Q2, a transformer T1 and a rectification filtering unit 220; the constant current unit 210 is connected with the rectification module 100; the constant current unit 210, the second switch Q2, the transformer T1 and the rectification filtering unit 220 are sequentially connected; the rectification filtering unit 220 is connected with the positive electrode of the load; the constant current unit 210 is configured for modulating the direct current output by the rectification module 100 into a primary constant current signal; the transformer T1 is configured for modulating the primary constant current signal into a high-frequency pulse signal; the rectification filtering unit 220 is configured for modulating the high-frequency pulse signal into a constant current signal and outputting the constant current signal to the positive electrode of the load; and the second switch Q2 is configured to be in an on state when the constant current unit 210 is started up and in an off state when the constant current unit 210 is standby.

In the embodiment, Fig. 6 is a circuit structure diagram of the LED driving circuit provided by another embodiment of the invention. Referring to figure 6, the power supply of the LED driving circuit is mains power, the rectification module 100 is the bridge rectification circuit, a first end of the bridge rectification circuit is connected with a live wire, a third end of the bridge rectification circuit is connected with a null line, a fourth end of the bridge rectification circuit is grounded, and a second end of the bridge rectification circuit outputs direct current to the constant current unit 210; after the direct current is processed by the constant current unit 210, a primary constant current signal is output to the transformer T1 by the second switch Q2; the third end of the second switch Q2 is connected with an output end of the constant current unit 210, the second end of the second switch Q2 is grounded, and the first end of the second switch Q2 is connected with the transformer Ti; and the second switch Q2 can be one kind of a triode, an MOS (metal oxide semiconductor) transistor or a relay and is configured to be in an on state when the constant current unit 210 is started up and in an off state when the constant current unit 210 is standby. The transformer T1 is configured for modulating the primary constant current signal into the high-frequency pulse signal; the rectification filtering unit 220 is configured for modulating the high-frequency pulse signal into the constant current signal and outputting the constant current signal to the positive electrode of the load; and LED 1 and LED 2 are loads, Q1 is the first switch, and R1 is the first resistor.

In some embodiments, referring to Fig. 6, the rectification filtering unit 220 includes a diode Di and a capacitor Ci; the transformer T1 and the diode Di form a first branch; the first branch is connected with the positive electrode of the load; and the transformer Ti, the diode Di and the capacitor C1 form a second branch, the second branch is grounded.

In some embodiments, the second switch Q2 includes one kind of an MOS transistor, a triode or a relay.

It can be clearly understood by a person skilled in the art that, for convenience and conciseness of description, only the division of the above-mentioned functional elements and modules is exemplified. In practical applications, the above-mentioned distribution of functions can be completed by different functional elements and models according to requirements, i.e. the internal structure of the device is divided into different functional elements or modules so as to complete all or part of the functions described above. The functional elements and modules in the embodiments may be integrated in one processing unit, may be physically separate from each other, or may be integrated in one unit by two or more units. The integrated units may be either in the form of hardware or in the form of software functional units. In addition, the specific names of the functional elements and modules are merely for convenience of mutual distinction, and are not used to limit the scope of protection of the present disclosure.

In the embodiments described above, emphasis has been placed on the description of various embodiments. Parts of an embodiment that are not described or illustrated in detail may be found in the description of other embodiments.

The above-described embodiments are merely illustrative of the technical solutions of the present invention and are not intended to be limiting thereof. Although the present invention has been described in detail with reference to the foregoing embodiments, those skilled in the art will appreciate that the technical solutions of the above-mentioned embodiments can still be modified, or some of the technical features thereof can be equivalently substituted.

## Claims

1. An LED driving circuit used in connection with a power supply and a load, comprising a rectification module, a constant current driving module, a comparison detection module and a voltage release module; wherein the voltage release module comprises a damping unit and a switch unit;
the rectification module is connected with the power supply and is configured for converting alternating current of the power supply into direct current;
the constant current driving module is connected with the rectification module and is configured for converting the direct current into a constant current signal and outputting the constant current signal to a positive electrode of the load;
the comparison detection module is connected with the voltage release module and the constant current driving module and is configured for detecting a voltage at an output end of the constant current driving module, controlling the switch unit in the voltage release module to be in an off state so as to enable the damping unit to divide the voltage for the load when the voltage at the output end of the constant current driving module is detected to be greater than a first preset voltage; and controlling the switch unit in the voltage release module to be in an on state so as to short-circuit the damping unit when the voltage at the output end of the constant current driving module is detected to be less than a second preset voltage;
the voltage release module is connected in series between a negative electrode of the load and a ground end.

2. The LED driving circuit according to claim 1, wherein the damping unit comprises a first resistor; the switch unit comprises a first switch; and the first resistor and the first switch are connected in parallel.

3. The LED driving circuit according to claim 2, wherein the comparison detection module comprises a comparator control unit and a signal detection unit;
the signal detection unit is connected with the output end of the constant current driving module and is configured for receiving the voltage at the output end of the constant current driving module and outputting a divided voltage to the comparator control unit after voltage division;
the comparator control unit is connected with the signal detection unit and the first switch, is configured for receiving the divided voltage output by the signal detection unit, sending a first level signal to the first switch when the divided voltage is greater than a third preset voltage, and sending a second level signal to the first switch when the divided voltage is less than a fourth preset voltage; wherein the first level signal is configured for controlling the first switch to be in an off state so as to enable the first resistor to divide the voltage for the load; and the second level signal is configured for controlling the first switch to be in an on state so as to short-circuit the first resistor.

4. The LED driving circuit according to claim 3, further comprising a power supply module;
wherein the power supply module is connected with the comparator control unit and the signal detection unit and is configured for supplying power to the comparator control unit and the signal detection unit.

5. The LED driving circuit according to claim 4, wherein the comparator control unit comprises a second resistor and a comparator;
wherein a first pin of the comparator is connected with the power supply module, a second pin of the comparator is connected with the second resistor and the power supply module, a third pin of the comparator is connected with the signal detection unit, a fourth pin of the comparator is connected with the first switch, and a fifth pin of the comparator is grounded.

6. The LED driving circuit according to claim 5, wherein the third preset voltage is a first reference voltage of the comparator, and the fourth preset voltage is a second reference voltage of the comparator;
correspondingly, the comparator is configured for outputting a low level signal to the first switch when the divided voltage output by the signal detection unit is greater than the first reference voltage of the comparator, and outputting a high level signal to the first switch when the divided voltage is less than or equal to the second reference voltage of the comparator;
the first switch is configured to be in an off state when the low level signal is received and in an on state when the high level signal is received.

7. The LED driving circuit according to claim 1, wherein the rectification module comprises a bridge rectification circuit.

8. The LED driving circuit according to claim 1, wherein the constant current driving module comprises a constant current unit, a second switch, a transformer and a rectification filtering unit; wherein the constant current unit is connected with the rectification module; the constant current unit, the second switch, the transformer and the rectification filtering unit are sequentially connected; and the rectification filtering unit is connected with the positive electrode of the load;
the constant current unit is configured for modulating the direct current output by the rectification module into a primary constant current signal;
the transformer is configured for modulating the primary constant current signal into a high-frequency pulse signal;
the rectification filtering unit is configured for modulating the high-frequency pulse signal into a constant current signal and outputting the constant current signal to the positive electrode of the load;
the second switch is configured to be in an on state when the constant current unit is started up and in an off state when the constant current unit is standby.

9. The LED driving circuit according to claim 8, wherein the rectification filtering unit comprises a diode and a capacitor;
the transformer and the diode form a first branch; wherein the first branch is connected with the positive electrode of the load;
the transformer, the diode and the capacitor form a second branch; wherein the second branch is grounded.

10. The LED driving circuit according to any one of claims 1 to 9, wherein the switch unit comprises one kind of an MOS transistor, a triode or a relay.
